# EUROPÄISCHE PATENTSCHRIFT

(11) **EP 1 088 259 B1**
(45) Veröffentlichungstag und Bekanntmachung des Hinweises auf die Patenterteilung: **05.03.2003**
(21) Anmeldenummer: 99929186.7
(22) Anmeldetag: 11.06.1999
(51) Int. Cl.: G05B 19/418

(54) **ELEKTRONISCHE STEUERUNG FÜR ANLAGEN DER DRUCKLUFT- ODER VAKUUMERZEUGUNG**
ELECTRONIC CONTROL SYSTEM FOR INSTALLATIONS WHICH GENERATE COMPRESSED AIR OR VACCUUMS
COMMANDE ELECTRONIQUE POUR DES INSTALLATIONS DE PRODUCTION D'AIR COMPRIME OU DE VIDE

(30) Priorität: 13.06.1998 DE 19826169
(43) Veröffentlichungstag der Anmeldung: 04.04.2001
(73) Patentinhaber: Kaeser Kompressoren GmbH, 95450 Coburg (DE)
(72) Erfinder: HOFMANN, Reinhold, D-96482 Ahorn-Eicha (DE)
(74) Vertreter: Schneiders, Josef, Dipl.-Ing.
(86) Internationale Anmeldenummer: EP9904045
(87) Internationale Veröffentlichungsnummer: WO99066374

(56) Entgegenhaltungen:
- EP-A- 0 593 225
- EP-A- 0 608 762
- EP-A- 0 768 586
- EP-A- 0 825 505
- EP-A- 0 825 506
- WO-A-88/05939
- WO-A-94/22066
- WO-A-97/39393
- US-A- 5 669 225
- PINKOWSKI G: "WIE MAN INTELLIGENTE FELDGER{TE HERTELLERUNABH{ANGIG UND EINHEITLICH BEDIENEN KANN" ELEKTROTECHNIK, Bd. 77, Nr. 11, 20. November 1995 (1995-11-20), Seiten 26-28, 30/31, XP000550462 ISSN: 1431-9578

## Beschreibung

Die Erfindung betrifft eine elektronische Steuerung für Aggregate der Druckluft- oder Vakuumerzeugung, mit programmierbaren elektronischen Schaltkreisen für die Steuerung, Regelung und Überwachung der technischen Funktionen von solchen Aggregaten, insbesondere der Funktionen des Drucklufterzeugers oder der Vakuumpumpe und der zugehörigen Antriebe sowie der Druckluftaufbereitung.

Die nach dem Stande der Technik bekannt gewordenen elektronischen Steuerungen für Anlagen der Druckluft- oder Vakuumerzeugung arbeiten mit den einzelnen Funktionen oder Funktionsgruppen von solchen Anlagen zugeordneten elektronischen Steuerungen. Soweit die Anlagen an übergeordnete Leitsysteme anzuschließen sind, werden als elektronische Steuerungen auch speicherprogrammierbare elektronische Steuerungen (SPS) oder herstellereigene Sondersteuerungen verwendet, die mit entsprechenden Schnittstellen zum Anschluß an übergeordnete Systeme versehen sind. Da die zu steuernden Funktionen der verschiedenen Drucklufterzeuger, Vakuumpumpen, Antriebsaggregate oder Druckluftaufbereitungsgeräte aus technischer Sicht höchst unterschiedlich sind, ist es schwierig, die einzelnen elektronischen Steuerungen sinnvoll miteinander zu verknüpfen. Insbesondere ist es schwierig, solche elektronischen Steuerungen an zumeist standardisierte übergeordnete Steuerung- und Leitsysteme anzukoppeln oder miteinander zu verbinden.

Ganz allgemein ist auch die spezielle Konstruktion (Design), die Fertigung, die Montage und die Inbetriebnahme von solchen Steuerungen mit relativ großem Arbeitsaufwand verbunden, weil immer wieder voneinander abweichende Kriterien beachtet werden müssen. In Anbetracht der Variantenvielfalt ergeben sich auch Probleme im Hinblick auf die Logistik für die Fertigung und Ersatzteilhaltung. Aufgrund der Vielfalt der verschiedenen Steuerungen ist auch die Wartung und Instandsetzung solcher elektronischen Steuerungen außerordentlich aufwendig und erfordert vom Wartungspersonal große Erfahrung und höchste Aufmerksamkeit, weil von Anlage zu Anlage alle Umstände neu bedacht werden müssen. Die Folge davon sind hohe Wartungskosten und eine umständliche Fehleranalyse im Falle einer Störung der Anlage.
Aus der lnternational Patentanmeldung WO 97/39393 ist bereits eine netzwerkbasierte Steuerung bekannt, welche den einzelnen Anlagenelementen über ein Netzwerk Daten für die Regelung zur Verfügung stellt. Um eine derartige Anlage betreiben zu können, ist eine Anbindung an ein Datennetz eine zwingende Voraussetzung. Häufig ist jedoch im Rahmen der Inbetriebsetzung ein solches Datennetz noch gar nicht verfügbar.
Aus der Schrift WO-A-88/05939 ist eine übergeordnete Verbundsteuerung zum Steuern von mehreren Kompressoren, die in einen Druckluftnetz fördern, bekannt. Die Inbetriebsetzung solcher verbundgesteuerter Anlagen ist in Ermangelung eines aggregatspezifisch abrufbaren Datenprofils höchst aufwändig und kompliziert. Eine vergleichbare Verbundsteuerung ist auch aus der EP A 0 593 225 B1 bekannt.
Die europäische Patentanmeldung EP 0 825 505 A1 schlägt ein Verfahren zur ferngesteuerten Inbetriebnahme von Maschinenanlagen vor. Auch hier ist die Verfügbarkeit eines Netzes Voraussetzung für die Inbetriebsetzung von einzelnen Anlagenkomponenten, was die Inbetriebnahme erschwert und verzögert.

Die Schrift US-5 669 225 beschreibt eine Mikroprozessorsteuerung für ein einzelnes Kühlaggregat. Die Inbetriebsetzung erfolgt in traditioneller Vorgehensweise durch Programmierung auf jeden einzelnen Typ der Baureihe individualisiert.
Aus der Schrift EP 0 768 586 A2 ist die Benutzung einer RS 232-Schnittstelle insbesondere für Motoren bekannt. Auch hier erfolgt die Inbetriebsetzung in herkömmlich aufwändiger Weise.
Die Schrift WO 94/22066 beschreibt ein Standardautomatisierungssystem mit unscharfer Logik. Das so genannte Fuzzy-Standardsystem muss jedoch aggregatspezifisch durch die Eingabe entsprechender Regelparameter an den Betriebszweck angepasst werden. Ein ebenfalls aufwändig zu programmierendes Fuzzy-Regelungsverfahren ist aus der europäischen Patentschrift EP 008 762 A1 bekannt. Der Programmiereraufwand wird hier dadurch reduziert, daß in dem Funktionsumfang standardisierter Automatisierungssysteme unscharfe Logik benutzt wird.
Sämtliche herkömmlichen Systeme bringen einen hohen Zeitaufwand bei der Inbetriebsetzung mit sich oder erfordern eine bereits vorhandene Infrastruktur, beispielsweise in Form eines Datennetzwerks.

Es ist deshalb Aufgabe der Erfindung, eine neue elektronische Steuerung für Aggregate der Druckluft- oder Vakuumerzeugung zu schaffen, die trotz der Typenvielfalt der verschiedenen Aggregate und der unterschiedlichen Einsatzbedingungen eine einfache Konstruktion (Design), Fertigung, Montage, Inbetriebnahme, Wartung, Fehlersuche und Reparatur zuläßt.
Zur Lösung dieser Aufgabe schlägt die Erfindung ausgehend von einer elektronischen Steuerung der eingangs genannten Art vor, daß die elektronische Steuerung als standardisierte Steuerung für die Verwendung in einer Vielzahl von unterschiedlichen Aggregaten der Druckluft- oder Vakuumerzeugung ausgebildet ist und einen durch ein Betriebssystem überwachten und gesteuerten Industrie-PC oder Industrie-Mikro-Computer mit einem oder mehreren Mikroprozessoren und einem zentralen Datenspeicher aufweist, der mindestens Steuerungs- und Regelungssoftware und eine Vielzahl von aggregatspezifischen Datenprofilen aufrufbar enthält, welche die zu den Aggregaten und deren Komponenten gehörenden Daten bezüglich der Steuer- und Regelalgorithmen und/oder Steuer- und/oder Regelparameter und/oder der technischen Kenn- und Grenzwerte und/oder der aggregatspezifischen Belegung der Ein- und Ausgänge umfassen, wobei die elektronische Steuerung in die Bedientafel eines Aggregates für die Druckluft- oder Vakuumerzeugung einbaubar ist.
Die Erfindung verwirklicht erstmals eine standardisierte Universalsteuerung für Aggregate der Druck- und Vakuumerzeugung, die für eine große Zahl von Aggregattypen verwendbar ist und problemlos auf jeden dieser Aggregattypen einstellbar ist. Nach der Installation der Steuerung in einem beliebigen Aggregattyp braucht für die Inbetriebnahme lediglich das für diesen

Aggregattyp spezifische Datenprofil über die Bedienoberfläche, und ohne auf ein Programmiergerät oder ähnliches angewiesen zu sein, aktiviert zu werden. Da die Steuerungshardware für alle Aggregattypen gleich ist und die Differenzierung im Hinblick auf die unterschiedlichen Aggregattypen in die Software verlagert worden ist, ergibt sich eine äußerst einfache Steuerung, deren Herstellung, Einbau, Anpassung, Bedienung, Handhabung und Wartung denkbar einfach ist.

Das Betriebssystem des Industrie-PC oder Industrie-Mikro-Computers ist zweckmäßig ein Echtzeit-Betriebssystem. Das hat den Vorteil, daß bei Betrieb der elektronischen Steuerung gemäß der Erfindung alle Steuerungs- und Regeleingriffe ohne störende Zeitverzögerung sofort ausgeführt werden.

Zweckmäßig ist weiterhin vorgesehen, daß auf dem Betriebssystem ein Laufzeitsystem (Softwareprozessor bzw. virtuelle Maschine) installiert ist, welches Programmanweisungen der Steuerungs- und Regelungssoftware in eine Darstellung umsetzt, die von dem/den Mikroprozessor/en der Steuerung bearbeitet werden kann, und welches die Kontrolle über die übernimmt. Ein solches Laufzeitsystem, welches auch als Softwareprozessor bzw. virtuelle Maschine bezeichnet werden kann, ermöglicht die Kommunikation zwischen der Steuerungs- und Regelungssoftware einerseits und dem oder den Mikroprozessoren des Industrie-PC bzw. Industrie-Mikro-Computers andererseits, so daß es ohne weiteres möglich ist, bewährte und vorhandene Steuerungs- und Regelungssoftware oder Bausteine davon für die Steuerung gemäß der Erfindung zu verwenden.

Zweckmäßig ist das Laufzeitsystem ein Soft-PLC bzw. eine Soft-SPS und emuliert eine speicherprogrammierbare Steuerung. Auf diese Weise ist es möglich, mit der Steuerung gemäß der Erfindung auf den breiten Erfahrungsschatz mit beliebigen speicherprogrammierbaren Steuerungen zurückzugreifen.

Eine andere zweckmäßige Weiterbildung der Steuerung gemäß der Erfindung sieht vor, daß das Betriebssystem des Industrie-PC bzw. Industrie-Mikro-Computers ohne zusätzliches Laufzeitsystem die Verwendung eine Programmiersprache für die Steuerungs- und Regelungssoftware unterstützt.

In jedem Fall, d. h. sowohl bei der Verwendung eines Laufzeitsystems als auch ohne Verwendung eines Laufzeitsystems erfolgt die Programmierung der Steuerungs- und Regelungssoftware in einer Programmiersprache z. B. in einer Programmiersprache für speicherprogrammierbare Steuerungen.

Bei einer besonders bevorzugten Ausführungsform der Steuerung gemäß der Erfindung besteht die Software im zentralen Datenspeicher mindestens aus Komponenten
- für die Steuerungs- und Regelungslogik,
- zur Ansteuerung einer Bedienoberfläche (Bedien- & Beobachten-Software)
- zur Verwaltung eines Historienspeichers (Auftragsbearbeitung) und
- zur Kommunikation über Schnittstellen (Kommunikations-Applikationen),
wobei diese Komponenten auf eine gemeinsame Datenbasis zugreifen, in der auch die Datenprofile gespeichert sind.

Auf diese Weise kommt man bei der Steuerung gemäß der Erfindung mit einem einzigen großen Datenspeicher aus, dessen Inhalte in der jeweils erforderlichen Kombination aufgerufen werden können.

Die Steuerung gemäß der Erfindung ist weiterhin gekennzeichnet durch eine Vielzahl von digitalen und/oder analogen Ein- und Ausgängen zur Zustandserfassung und Steuerung der angeschlossenen Aggregatkomponenten, deren Belegung über die Steuerungs- und Regelungssoftware festlegbar ist, eine Bedienoberfläche mit Klartextanzeige und eine oder mehrere standardisierte Datenschnittstellen zum kommunikativen Anschluß von über-, neben- oder untergeordneten Systemen. Dabei sind der Industrie-PC bzw. der Industrie-Mikro-Computer und der zugehörige Datenspeicher in einem kompakten, abgeschirmten Gehäuse angeordnet, welches in die Bedientafel eines Aggregates für die Druckluft- oder Vakuumerzeugung einbaubar ist und dessen Vorderseite die Bedienoberfläche mit Klartextanzeige aufweist, während die Rückwand und/oder die Oberwand und/oder die Unterwand und/oder die Seitenwände des Gehäuses mit digitalen und/oder analogen Ein- oder Ausgängen und den Datenschnittstellen versehen sind. Das so gebildete Steuergerät ist kompakt aufgebaut und in die Bedientafeln von beliebigen Aggregaten für die Druckluft- oder Vakuumerzeugung einbaubar.

Da das Steuergerät mit integrierter Bedienoberfläche zusammen mit der Steuerungshardware für alle Aggregate gleich ist und die Differenzierung lediglich im Bereich der Software vorgenommen wird, ergibt sich ein Universalsteuergerät, welches ohne jede äußere Veränderung vielfältig verwendbar ist.

Durch die an dem Kompaktgerät vorgesehenen standardisierten Schnittstellen ist es darüber hinaus auf einfache Weise möglich, diese Steuerung mit anderen Datenverarbeitungssystemen zu vernetzen, beispielsweise an übergeordnete Leitsysteme anzuschließen, mit parallelen Systemen zu koppeln oder zum Zwecke der Femübertragung oder der Fernsteuerung mit einem Datenfemübertragungssystem (DFÜ) zu verbinden. So ist es beispielsweise möglich, über die Datenschnittstellen und ein geeignetes Modem eine Verbindung zur Fernüberwachung des Herstellers des Aggregates oder einem Serviceanbieter herzustellen, und zwar beispielsweise über das Telefonfestnetz, über das GSM-Funknetz oder das Internet.

Zweckmäßig ist vorgesehen, daß die aggregatspezifischen Datenprofile die zu jedem Aggregattyp und dessen Komponenten gehörenden Daten bezüglich der Steuer- und Regelalgorithmen und/oder der Steuer- und Regelparameter und/oder der technischen Kenn- und Grenzwerte und/oder der aggregatspezifischen Belegung der Ein- und Ausgänge umfassen und aus dem Datenspeicher jeweils für einen Anlagentyp zusammengefaßt aufrufbar sind. Hierdurch ist es nach Einbau der Steuerung auf einfache Weise möglich, zunächst die Standardsteuerung dieses speziellen Aggregattyps zu aktivieren, ohne daß hierzu besondere Sachkenntnisse erforderlich wären oder umfangreiche Installations- und Programmierungsarbeiten notwendig wären.

Für die Feinanpassung jedes aufgerufenen Datenprofiles ist vorgesehen, daß die Daten jedes aufgerufenen Datenprofiles einschließlich der die Belegung der Ein- und Ausgänge bestimmenden Daten mittels der Bedienoberfläche und/oder über eine der Datenschnittstellen veränderbar sind. Hierdurch ist es möglich, jedes abgespeicherte Datenprofil erforderlichenfalls nachträglich an die im konkreten Einzelfall vorgefundenen Gegebenheiten oder an Sonderwünsche des Betreibers anzupassen.

Zweckmäßig sind mehrere unterschiedliche passwortgeschützte, hierarchisch abgestufte Levels für die Veränderung der Datenprofile oder anderer Einstellungen eingerichtet. Der niedrigste Level ist zweckmäßig für den Betreiber der Anlage vorgesehen und ermöglicht lediglich die Veränderung einiger weniger, für den Betrieb der Gesamtanlage ungefährlicher Parameter innerhalb vorgegebener Grenzen. Die nächsten gehobenen Level sind ausschließlich dem Wartungspersonal zugänglich und ermöglichen - je nach Qualifikation des Wartungspersonals - schon tiefergehende Eingriffe in das Datenprofil. Der höchste Level ist ausschließlich dem Hersteller vorgehalten und gestattet gravierende Veränderungen eines Datenprofiles oder gegebenenfalls auch die Einrichtung eines völlig neuen Datenprofiles, falls sich dies als notwendig herausstellen sollte.

Eine besonders vorteilhafte Weiterbildung der Erfindung sieht vor, daß der Historienspeicher für die Zwecke der Störungsanalyse und der Analyse des Betriebsverhaltens über einen großen Zeitraum bestimmte Ereignisse oder Zustände aus der Vergangenheit mit Datum, Uhrzeit, Status und Erläuterung festhält. Unter Status wird hier eine Information verstanden, ob ein Zustand eingetreten ist, aufgehört hat oder quittiert worden ist. Vorgesehen ist hier beispielsweise, die letzten 100 Ereignisse und Zustände sowie die Umstände von deren Auslösung und Beendung festzuhalten, so daß man bei Aufruf des Historienspeicher feststellen kann, wann und unter welchen Umständen in der Vergangenheit Probleme aufgetreten sind.

Zu diesem Zweck ist der Inhalt des Historienspeichers am Display oder über die kommunikativen Datenschnittstellen im Klartext abrufbar. Auf diese Weise kann der Inhalt des Historienspeichers beispielsweise auf einem Bildschirm dargestellt oder mittels eines Druckers ausgedruckt werden.

Eine besonders vorteilhafte Weiterbildung sieht weiterhin einen Auswertealgorithmus für den Historienspeicher vor, anhand dessen mittels der gespeicherten Ergebnisse und/oder Zustände aus der Vergangenheit das Verhalten der Steuerung für die Zukunft optimierbar ist. Eine derart intelligent ausgebildete Steuerung kann also gewissermaßen aus dem Betriebsverhalten der Vergangenheit lemen und dieses in der Zukunft optimieren.

Besondere Vorteile ergeben sich, wenn die Software des Industrie-PC oder des Industrie-Mikro-Computers über eine der Datenschnittstellen lokal oder per Datenfernübertragung frei programmierbar und somit beliebig anpaßbar ist Auf diese Weise ist es möglich, die Steuerungen der technischen Entwicklung optimal anzupassen und gegebenenfalls auch völlig neue Steuerkriterien und/oder Datenprofile von neuen Aggregate in die Steuerung einzubeziehen. Das durch die Steuerung gemäß der Erfindung geschaffene System ist also auch releasefähig.

In einer weiteren Ausgestaltung der Steuerung gemäß der Erfindung kann die Software des Industrie-PC oder Industrie-Mikro-Computers auch eine programmierbare Timerfunktion erhalten, die das Aggregat nach einem vorgegebenen Zeitprogramm steuern kann. Hierdurch ist es möglich, z.B. Stillstandszeiten wie lange Wochenenden, Urlaub etc., bei der Steuerung zu berücksichtigen.

Falls es notwendig ist, eine besonders große Zahl von Eingangsgrößen zu berücksichtigen, die nur unscharf ermittelt werden können, sieht die Steuerung gemäß der Erfindung weiterhin vor, daß auf dem Industrie-PC oder dem Industrie-Mikro-Computer aggregatspezifische Software-Fuzzy-Controller installierbar sind, jeweils bestehend aus einer aggregatspezifischen Regelbasis, einer Inferenzmaschine und einem den Eingängen zugeordneten Bedingungsinterface sowie einem den Ausgängen zugeordneten Aktionsinterface. Ein solcher ebenfalls nur in Software konfigurierter Fuzzy-Controller macht es auf einfache Weise möglich, das angeschlossene Aggregat der Druckluft- oder Vakuumerzeugung auch nach den Regeln der Fuzzy-Logik zu steuern, die es bekanntlich möglich macht, eine besonders große Anzahl von Eingangsbedingungen zu berücksichtigen, wobei diese Eingangsbedingungen komplex miteinander verknüpft sein können und nicht einmal genau gemessen zu werden brauchen.

Als standardisierte kommunikative Schnittstelle ist mindestens eine serielle RS-232-Schnittstelle vorgesehen, an die wahlweise ein Programmiergerät, ein Drucker oder ein Modem angeschlossen werden kann, mit welchem es möglich ist, die elektronische Steuerung per Telefonleitung, Internet, GSM-Funktelefon oder mittels einer sonstigen geeigneten Datenfernübermittlung anzusteuern.

Als zweite kommunikative Schnittstelle sieht die Steuerung gemäß der Erfindung mindestens eine serielle Schnittstelle nach dem Standard RS-485 vor. Eine solche Schnittstelle ist besonders zur Punkt-zu-Punkt-Verbindung der Steuerungen von zwei parallel arbeitenden Aggregaten geeignet.

Schließlich ist als dritte standardisierte kommunikative Schnittstelle mindestens eine Profi-Bus-Schnittstelle vorgesehen. Diese Schnittstelle ist insbesondere zum Ankoppeln der Steuerung an übergeordnete Leitsysteme geeignet. Erforderlichenfalls kann auch über diese Schnittstelle und ein geeignetes Modem eine Verbindung zu einer Datenfernübermittlung hergestellt werden.

Falls eine besonders größe Anzahl von Ein- und Ausgängen benötigt wird, ist weiterhin vorgesehen, daß der Systembus des Industrie-PC bzw. des Industrie-Mikro-Computers mit einer Schnittstelle zum Anschluß von Erweiterungsplatinen, vorzugsweise mit zusätzlichen Ein- und Ausgängen versehen ist.

Zweckmäßig sind alle Ein- und Ausgänge als Steckerklemmen an der Rückwand und/oder der Oberwand und/oder der Unterwand und/oder den Seitenwänden des Gehäuses ausgebildet. Hierdurch ist es auf einfache Weise möglich, die gesamte Verkabelung im Bereich hinter der Bedientafel des Aggregates zu belassen.

Die Bedienoberfläche der Steuerung weist zweckmäßig eine geschützte Folientastatur und ein LCD-Display auf, wobei alle Funktionen der Steuerung menügeführt über die Folientastatur abrufbar sind und mit ihren Daten auf dem LCD-Display Online umschaltbar in verschiedenen Sprachen oder Einheitensystemen ablesbar sind. Durch die Folientastatur in Verbindung mit dem menügeführten Aufruf der unterschiedlichen Funktionen ist die Bedienung äußerst einfach und wenig störanfällig.

Die Bedienoberfläche weist darüber hinaus zweckmäßig Leuchtdioden für die Überwachung und Anzeige der Hauptfunktionen und für Störmeldungen auf. Hierdurch wird sichergestellt, daß die wichtigsten Betriebszustände, Störungen oder Wartungsmeldungen schon von weitem sichtbar sind, ohne daß man die Daten auf dem Display lesen müßte.

Weiterhin sind an der Steuerung gemäß der Erfindung neben den durch den Aggregat-Typ belegten Ein- und Ausgängen zusätzliche freie Ein- und Ausgänge vorgesehen. Mit Hilfe dieser freien Ein- und Ausgänge ist es möglich, gegebenenfalls weitere Informationen abzufragen und/oder einzugeben, die vom jeweiligen Betreiber des Aggregates aus irgendwelchen Gründen zusätzlich gewünscht werden. Die Belegung der zusätzlichen Ein- und Ausgänge ist mittels der Steuerung gemäß der Erfindung ebenfalls auf einfache Art und Weise programmierbar.

Schließlich ist vorgesehen, daß über die Menü-Steuerung ein Prüfmodus aufrufbar ist, bei welchem lokal oder per Datenfernübertragung bei Betrieb des Aggregates die Werte der analogen und/oder digitalen Ein- und Ausgänge einzeln abfragbar sind und bei Stillstand des Aggregates außerdem die Zustände der Ausgänge unabhängig von der Steuerungslogik beliebig vorgebbar sind. Diese zusätzliche Funktion macht es möglich, im Bedarfsfall während des Betriebes des Aggregates alle analogen Ein- und Ausgänge einzeln abzufragen und bei Stillstand des Aggregates zusätzlich zur Fehlerdiagnose die Ausgänge beliebig mit Signalen zu beaufschlagen.

Ein Ausführungsbeispiel der Erfindung wird im folgenden anhand der Zeichnungen näher erläutert. Es zeigen:
- Fig. 1:: schematisch die Anordnung der elektronischen Steuerung gemäß der Erfindung in einer Drucklufterzeugungsanlage und die Anbindung der Steuerungen an ein übergeordnetes Leitsystem,
- Fig.2, 3 und 4:: das Gehäuse der Steuerung gemäß der Erfindung in verschiedenen Ansichten, teilweise im Schnitt;
- Fig. 5:: ein Blockschaltbild der für die Steuerung gemäß der Erfindung verwendeten Hardware;
- Fig. 6:: ein Blockschaltbild der für die Steuerung gemäß der Erfindung verwendeten Software;
- Fig. 7:: ein Blockschaltbild eines in der Steuerung gemäß der Erfindung installierten Soft-Fuzzy-Controllers.

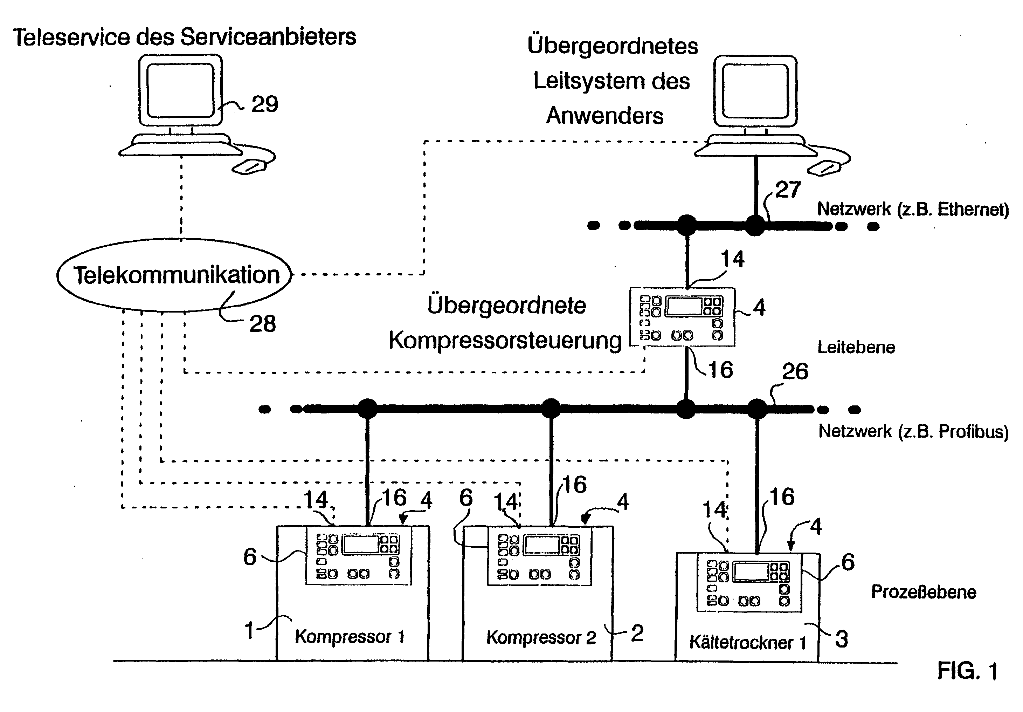

Die in Fig. 1 dargestellt Drucklufterzeugungsanlage weist zwei Kompressoren 1 und 2 mit integriertem elektrischen Antrieb sowie einen Kältetrockner 3 auf, der die von den Kompressoren 1 und 2 erzeugte Druckluft trocknet. In jedem der Kompressoren 1 und 2 und in den Kältetrockner 3 sind elektronische Steuerungen 4 gemäß der Erfindung eingebaut.

Die elektronische Steuerungen 4 befindet sich jeweils in einem kompakten, abgeschirmten Gehäuse 5, welches in die Bedientafel 6 der Kompressoren 1 und 2 bzw. des Kältetrockners 3 eingebaut ist.

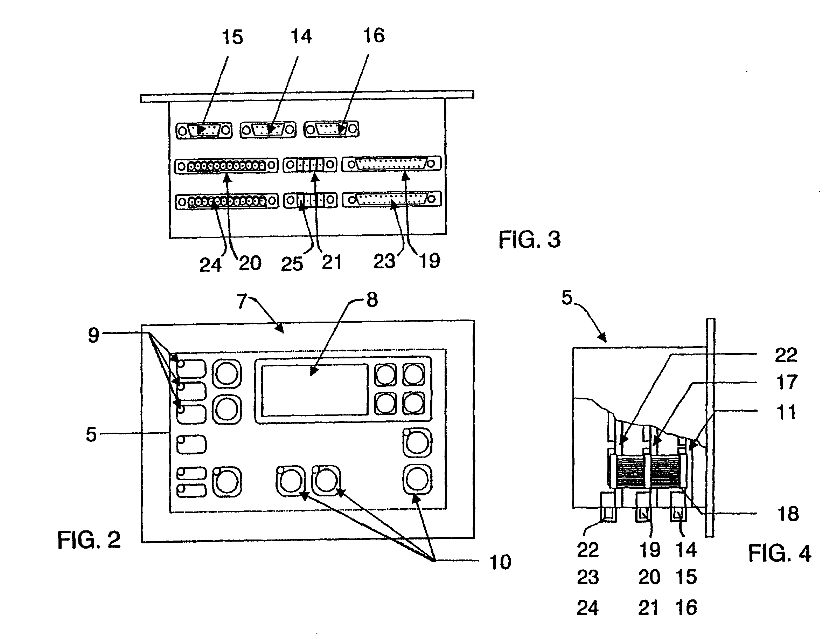

Wie aus den Fig. 2 bis 4 ersichtlich ist, weist das Gehäuse 5 an der Vorderseite eine Bedienoberfläche 7 mit einer Klartextanzeige in Form eines LCD-Displays 8 auf. Außerdem ist die Bedienoberfläche 7 mit einer Reihe von Leuchtdioden 9 für Betriebs- bzw. Störungsmeldungen versehen, die zum Teil im Bedienschalter 10 integriert sind. Die Bedienschalter 10 sind Bestandteil einer die Vorderseite des Gehäuses 5 dicht abschließenden Folientastatur.

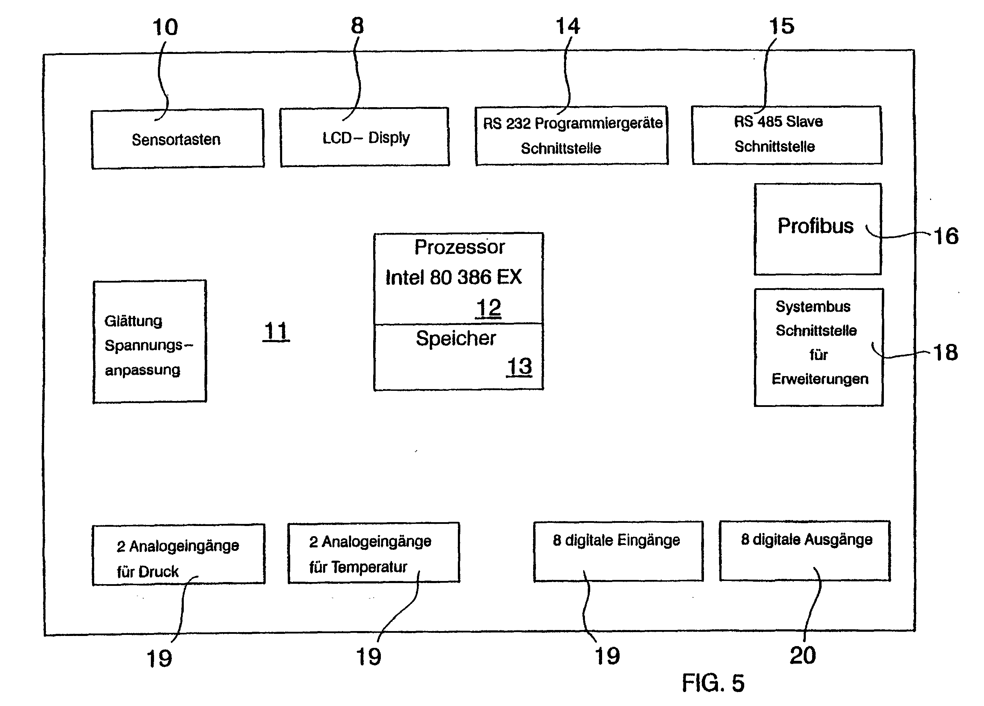

Die im Inneren des Gehäuses 5 enthaltene elektronische Steuerung 4 weist eine Prozessorplatine 11 auf, die mit einem Industrie-Mikro-Computer (IMC) bzw. Industrie-PC 12 bestückt ist. Dabei handelt sich es sich um einen MikroComputer mit allen wesentlichen Funktionen eines frei programmierbaren PC, welcher für industrielle Applikationen eingesetzt wird. Dieser Industrie-Mikro-Computer bzw. Industrie-PC 12 arbeitet mit einem ebenfalls auf der Prozessorplatine 11 befindlichen umfangreichen zentralen Datenspeicher 13 (vgl. auch Fig. 5). Schließlich ist die Prozessorplatine 11 mit drei Standard-Datenschnittstellen versehen, nämlich der Datenschnittstelle 14 nach dem Standard RS-232, der Datenschnittstelle 15 nach dem Standard RS-485 und der Datenschnittstelle 16 nach dem Profibus-Standard. Die Datenschnittstellen 14, 15 und 16 sind als Steckverbindungen ausgebildet und an der Unterwand des Gehäuses 5 aus dem herausgeführt.

Weiterhin befindet sich in dem Gehäuse 5 mindestens eine E/A-Platine 17, die über einen Systembus 18 mit der Prozessorplatine 11 verbunden ist. Die Platine 17 ist mit Steckverbindungen für die Eingänge 19 der Steuerung, weiterhin mit Steckverbindungen für die Ausgänge 20 der Steuerung und schließlich mit Steckverbindungen für die Energieversorgung 21 versehen. Auch diese Steckverbindungen der E/A-Platine 17 sind im Bereich der Unterwand des Gehäuses 5 aus diesem herausgeführt.

Weiterhin befindet sich in dem Gehäuse 5 eine Erweiterungsplatine 22, die ebenfalls an den Systembus 18 anschließbar ist und weitere Steckverbindungen für Eingänge 23, für Ausgänge 24 und für die Energieversorgung 25 aufweist. Auch die Steckverbindungen der Erweiterungsplatine 22 sind im Bereich der Unterwand des Gehäuses 5 aus diesem herausgeführt. Die Erweiterungsplatine 22 wird allerdings nur verwendet, wenn für den Betrieb des angeschlossenen Aggregates bzw. der angeschlossenen Anlage mehr Ein- und Ausgänge benötigt werden, als auf der Standard-E/A-Platine 17 vorgesehen sind. Für die Eingänge 19 bzw. 23 sind die verschiedenen analogen oder digitalen Signalgeber des zu überwachenden Aggregates an die Steuerung angeschlossen. Umgekehrt erhalten die an dem Aggregat vorgesehenen Steller ihre Steuerungssignale über die Ausgänge 20 bzw. 24 der Steuerung 4.

Über die Schnittstelle 14 mit dem Standard RS-232 kann an die Steuerung ein Programmiergerät angeschlossen werden, mit dessen Hilfe es möglich ist, den Inhalt des zentralen Speichers 13, d.h. die in diesem zentralen Speicher gespeicherten Daten und Programme zu verändern und zu ergänzen. Weiterhin kann an diese Datenschnittstelle 14 ein Drucker angeschlossen werden, mit dessen Hilfe es möglich ist, den Inhalt des Datenspeichers 13 ganz oder teilweise auszudrucken. Schließlich kann mittels dieser Schnittstelle über ein geeignetes Modem eine Verbindung zu einer Datenfernübermittlung hergestellt werden, beispielsweise zum Telefon-Festnetz, zum GSM-Funknetz oder zum Internet. Mit dieser Datenfernübermittlung ist es möglich, die Steuerung beispielsweise von einem Teleservice eines Service-Anbieters her zu überwachen oder erforderlichenfalls Eingriffe in die abgespeicherten Daten oder Programme vorzunehmen.

Wie weiterhin aus Fig. 1 ersichtlich ist, können die einzelnen Steuerungen 4 über die Schnittstellen 16 mit Profibus-Standard an das Netzwerk eines Leitsystemes 26 angeschlossen werden, welches die parallel laufenden Aggregate 1, 2 und 3 zusammenfaßt und deren Betrieb aufeinander abstimmt. Auch dieses Leitsystem 26 arbeitet wieder mit einer Steuerung 4 gemäß der Erfindung, in welcher zu diesem Zweck ein Datenprofil aufgerufen wird, welches dieser Leitfunktion entspricht.

Über diesem Leitsystem 26 liegt beim Ausführungsbeipiel nach Fig. 1 das übergeordnete Leitsystem 27 des Anwenders, welches über die Schnittstelle 14 mit Standard RS-232 an die in dem darunterliegenden Leitsystem 26 liegende Steuerung 4 angeschlossen ist, z.B. über ein Ethernet. Dieses übergeordnete Leitsystem des Anwenders 27 stellt die Verbindung zur allgemeinen Prozeßsteuerung des Anwenders her.

Alle Steuerungen 4 können über die Schnittstellen 14 mit Standard RS-232 und ein Modem 28 und geeignete Datenfemübertragungs-Einrichtungen, z. B. Telefon-Festnetz, GSM-Funknetz oder Internet an den Teleservice 29 einer Service-Anbieters angeschlossen werden. Auf diese Weise wird eine Fernwartung der angeschlossenen Aggregate und Anlagen ermöglicht.

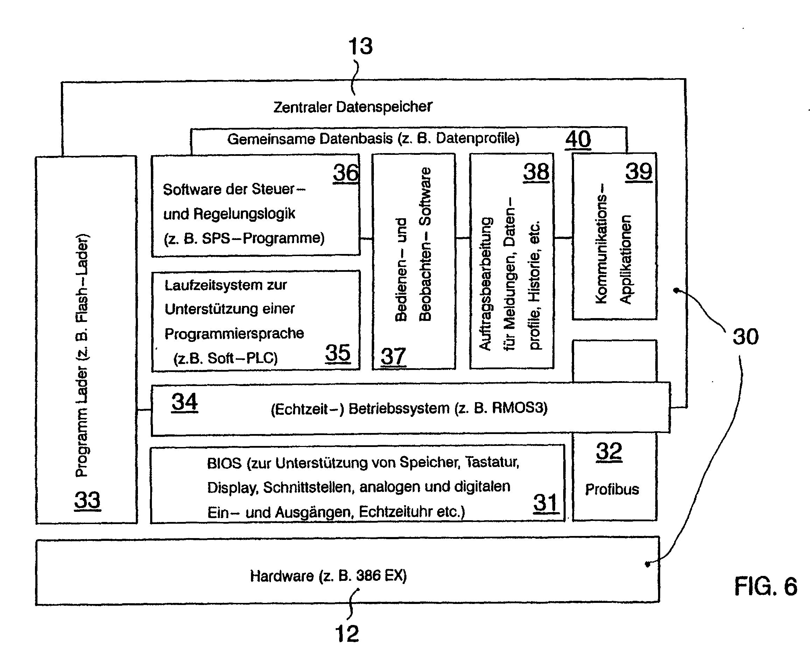

Fig. 6 zeigt beispielsweise den prinzipiellen Aufbau einer Software für die Steuerung gemäß der Erfindung. Der Hardware 30, bestehend aus dem Prozessor 12 und dem zugeordneten umfangreichen zentralen Datenspeicher 13 ist ein BIOS (Basical/lnput/Output System) 31 zugeordnet, welches in herkömmlicher Weise den Speicher, die Tastatur, das Display, die Schnittstellen, die digitalen und analogen Ein- und Ausgänge sowie die Echtzeit-Uhr unterstützt. Die Steuerung gemäß der Erfindung weist weiterhin ein Software-Paket 32 für die Profi-Bus-Schnittstelle sowie ein Software-Paket 33 für einen Programmlader, z.B. einen Flash-Lader, auf.

Über dem BIOS 31 ist ein Echtzeit-Betriebssystem 34 (z.B. RMOS 3) installiert, welches für ausreichend schnelle Steuerungs- und Regelungseingriffe der Steuerung sorgt.

Das Echtzeit-Betriebssystem 34 unterstützt beim Ausführungsbeispiel ein Laufzeitsystem 35. Bei diesem Laufzeitsystem handelt es sich um ein Software-Programm bzw. eine virtuelle Maschine, mit deren Hilfe Programmanweisungen der Steuerungs- und Regelungssoftware in eine Darstellung umgesetzt wird, die von dem Mikroprozessor der Steuerung bearbeitet werden kann. Außerdem übernimmt das Laufzeitsystem 35 die Kontrolle über die Abarbeitung der Programme. Beim Ausführungsbeispiel ist dieses Laufzeitsystem 35 ein Soft-PLC bzw, eine Soft-SPS und emuliert eine speicherprogrammierbare Steuerung.

Weiterhin enthält der zentrale Datenspeicher 13 Software 36 der Steuerungsund Regelungslogik, z.B. eine Anzahl von SPS- oder PLC-Programmen für die verschiedenen zu steuernden oder zu regelnden Funktionen des Aggregates. Weiterhin ist Software 37 zum Bedienen und Beobachten der Bedienoberfläche 7, Software 38 für verschiedene Auftragsbearbeitungen, z.B. für die Bearbeitung von Meldungen, Datenprofilen, des Historien-Speichers etc., vorgesehen. Schließlich ist noch Software für die Bearbeitung der Kommunikationsapplikationen vorgesehen, nämlich zur Kommunikation über die Schnittstellen der Steuerung.

Der zentrale Datenspeicher 13 enthält eine große Zahl von speziellen Datenprofilen 40, die einen Teil der gemeinsamen Datenbasis für die Universalsteuerung darstellen. Diese aggregatspezifischen Datenprofile 40 umfassen die zu jedem Aggregat gehörenden Daten bezüglich der Steuer- und Regelalgorithmen und/oder der Steuer- und Regelparameter und/oder der technischen Kenn- und Grenzwerte und/oder der aggregatspezifischen Belegung der Ein- und Ausgänge und können aus dem Datenspeicher jeweils für ein Aggregat zusammengefaßt aufgerufen werden.

Gegebenenfalls kommt die Steuerung gemäß der Erfindung auch ohne das Laufzeitsystem 35 aus. In diesem Fall unterstützt das Echtzeit-Betriebssystem 34 unmittelbar die Verwendung einer Programmiersprache für die Steuerungsund Regelungssoftware, z.B. die SPS- oder PLC-Programme.

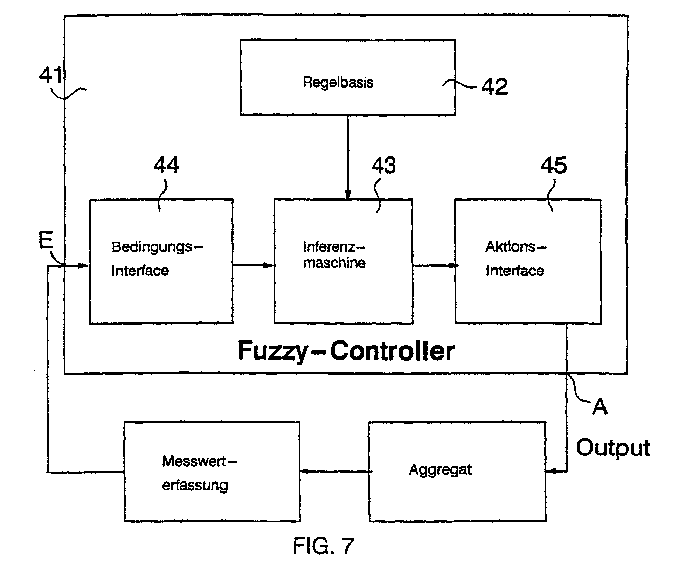

Gegebenenfalls kann auf dem Industrie-PC oder Industrie-Mikro-Computer auch ein Software-Fuzzy-Controller 41 installiert werden, wie er in Fig. 7 dargestellt ist. Dieser Software-Fuzzy-Controller besteht aus einer anlagespezifischen Regelbasis 42, einer Inferenzmaschine 43, einem den Eingängen zugeordneten Bedingungsinterface 44 sowie einem den Ausgängen zugeordneten Aktionsinterface 45. Mit einem solchen Fuzzy-Controller 41 ist es möglich, eine sehr große Zahl und eventuell auch unscharf ermittelte Meßwerte für die Steuerung und Regelung des Aggregates heranzuziehen.

## Patentansprüche

1. Elektronische Steuerung für Aggregate der Druckluftoder Vakuumerzeugung, mit programmierbaren elektronischen Schaltkreisen für die Steuerung, Regelung und Überwachung der technischen Funktionen von solchen Aggregaten, insbesondere der Funktionen des Drucklufterzeugers oder der Vakuumpumpe und der zugehörigen Antriebe sowie der Druckluftaufbereitung, **dadurch gekennzeichnet, daß** die elektronische Steuerung als standardisierte Steuerung für die Verwendung in einer Vielzahl von unterschiedlichen Aggregaten der Druckluft- oder Vakuumerzeugung ausgebildet ist und einen durch ein Betriebssystem (34) überwachten und gesteuerten Industrie-PC oder Industrie-Mikro-Computer mit einem oder mehreren Mikroprozessoren (12) und einem zentralen Datenspeicher (13) aufweist, der mindestens Steuerungs- und Regelungssoftware (36) und eine Vielzahl von aggregatspezifischen Datenprofilen (40) aufrufbar enthält, welche die zu den Aggregaten und deren Komponenten gehörenden Daten bezüglich der Steuer- und Regelalgorithmen und/oder Steuer- und/oder Regelparameter und/oder der technischen Kenn- und Grenzwerte und/oder der aggregatspezifischen Belegung der Ein- und Ausgänge (19, 20; 23, 24) umfassen, wobei die elektronische Steuerung in die Bedientafel eines Aggregates für die Druckluft- oder Vakuumerzeugung einbaubar ist.

2. Steuerung nach Anspruch 1, **dadurch gekennzeichnet, daß** das Betriebssystem (34) ein Echtzeit-Betriebssystem ist.

3. Steuerung nach Anspruch 1 oder 2, **dadurch gekennzeichnet, daß** auf dem Betriebssystem (34) ein Laufzeitsystem (35) (Softwareprozessor bzw. virtuelle Maschine) installiert ist, welches Programmanweisungen der Steuerungs- und Regelungssoftware (36) in eine Darstellung umsetzt, die von dem/den Mikroprozessor/en (12) der Steuerung bearbeitet werden kann, und welches die Kontrolle über die Abarbeitung übernimmt.

4. Steuerung nach Anspruch 3, **dadurch gekennzeichnet, daß** das Laufzeitsystem (35) ein Soft-PLC bzw. Soft-SPS ist und eine speicherprogrammierbare Steuerung emuliert.

5. Steuerung nach Anspruch 1 oder 2, **dadurch gekennzeichnet, daß** das Betriebssystem (34) ohne zusätzliches Laufzeitsystem (35) die Verwendung einer Programmiersprache für die Steuerungs- und Regelungssoftware unterstützt.

6. Steuerung nach Anspruch 3, 4 oder 5, **dadurch gekennzeichnet, daß** die Programmierung der Steuerungs- und Regelungssoftware in einer Programmiersprache für speicherprogrammierbare Steuerungen erfolgt.

7. Steuerung nach einem der Ansprüche 1 bis 6, **dadurch gekennzeichnet, daß** die Software im zentralen Datenspeicher (13) mindestens aus Komponenten
- für die Steuerungs- und Regelungslogik (36)
- zur Ansteuerung einer Bedienoberfläche (Bedien- & Beobachten-Software) (37)
- zur Verwaltung eines Historienspeichers (Auftragsbearbeitung) (38) und
- zur Kommunikation über Schnittstellen (Kommunikations-Applikationen) (39)
besteht und das diese Komponenten auf eine gemeinsame Datenbasis zugreifen, in der auch die Datenprofile (40) gespeichert sind.

8. Steuerung nach einem der Ansprüche 1 bis 7, **gekennzeichnet durch**
- eine Vielzahl von digitalen oder analogen Ein- und Ausgängen (19, 20; 23, 24) zur Zustandserfassung und Steuerung der angeschlossenen Aggregatkomponenten, deren Belegung über die Steuerungs- und Regelungssoftware (36) festlegbar ist,
- eine Bedienoberfläche (7) mit Klartextanzeige,
- und eine oder mehrere standardisierte Datenschnittstellen (14, 15, 16) zum kommunikativen Anschluß von über-, nebenoder untergeordneten Systemen

9. Steuerung nach Anspruch 8, **dadurch gekennzeichnet, daß** der Industrie-PC oder Industrie-Mikro-Computer und der zugehörige Datenspeicher (13) in einem kompakten, abgeschirmten Gehäuse (5) angeordnet sind, welches in die Bedientafel (6) eines Aggregates für die Druckluft- oder Vakuumerzeugung einbaubar ist und dessen Vorderseite die Bedienoberfläche (7) mit Klartextanzeige aufweist, während die Rückwand oder die Oberwand und/oder die Unterwand und/oder die Seitenwand des Gehäuses (5) mit den digitalen und/oder analogen Ein- und Ausgängen und den Datenschnittstellen versehen sind.

10. Steuerung nach Anspruch 1, **dadurch gekennzeichnet, daß** die Daten jedes aufgerufenen Datenprofiles (40) einschließlich der die Belegung der Ein- und Ausgänge (19, 20; 23, 24) bestimmenden Daten mittels der Bedienoberfläche (7) und/oder über eine Datenschnittstelle (14, 15, 16) veränderbar sind.

11. Steuerung nach Anspruch 1, **dadurch gekennzeichnet, daß** mehrere unterschiedliche, passwortgeschützte, hierarchisch abgestufte Levels für die Veränderung der Datenprofile (40) oder anderen Einstellungen eingerichtet sind.

12. Steuerung nach Anspruch 7, **dadurch gekennzeichnet, daß** der Historienspeicher für die Zwecke der Störungsanalyse und der Analyse des Betriebsverhaltens über einen großen Zeitraum bestimmter Ereignisse oder Zustände aus der Vergangenheit mit Datum, Uhrzeit, Status und Erläuterung festhält.

13. Steuerung nach Anspruch 12, **dadurch gekennzeichnet, daß** der Inhalt des Historienspeicher am Display (8) und/oder über die kommunikativen Datenschnittstellen (14, 15, 16) im Klartext abrufbar ist.

14. Steuerung nach den Ansprüchen 12 oder 13, **gekennzeichnet durch** einen Auswertealgorithmus für den Historienspeicher, anhand dessen mittels der gespeicherten Ereignisse und/oder Zustände aus der Vergangenheit das Verhalten der Steuerung für die Zukunft optimierbar ist.

15. Steuerung nach Anspruch 8, **dadurch gekennzeichnet, daß** die Software des Industrie-PC oder Industrie-Mikro-Computers über eine der Datenschnittstellen (14, 15, 16) lokal oder per Datenfernübertragung frei programmierbar und somit beliebig anpaßbar ist.

16. Steuerung nach Anspruch 15, **dadurch gekennzeichnet, daß** die Software des Industrie-PC oder Industrie-Mikro-Computers eine speicherprogrammierbare Timerfunktion erhält, die das Aggregat nach einem vorgegebenen Zeitprogramm steuern kann.

17. Steuerung nach Anspruch 8, **dadurch gekennzeichnet, daß** auf dem Industrie-PC oder Industrie-Mikro-Computer aggregatspezifische Software-Fuzzy-Controller (41) installierbar sind, jeweils bestehend aus einer aggregatspezifischen Regelbasis (42) einer Inferenzmaschine (43) und einem den Eingängen zugeordneten Bedingungsinterface (44) sowie einem den Ausgängen zugeordneten Aktionsinterface (45).

18. Steuerung nach Anspruch 8, **dadurch gekennzeichnet, daß** als eine der standardisierten kommunikativen Schnittstellen eine serielle RS-232-Schnittstelle (14) vorgesehen ist.

19. Steuerung nach Anspruch 8. **dadurch gekennzeichnet, daß** als eine der standardisierten kommunikativen Schnittstellen eine serielle RS-485-Schnittstelle (15) vorgesehen ist.

20. Steuerung nach Anspruch 8, **dadurch gekennzeichnet, daß** als eine der standardisierten kommunikativen Schnittstellen eine Profi-Bus-Schnittstelle (16) vorgesehen ist.

21. Steuerung nach Anspruch 8, **dadurch gekennzeichnet, daß** der Systembus (18) des Industrie-PC oder Industrie-Mikro-Computers mit einer Schnittstelle zum Anschluß von Erweiterungsplatinen, vorzugsweise mit zusätzlichen Ein- und Ausgängen (23, 24) versehen ist.

22. Steuerung nach Anspruch 9, **dadurch gekennzeichnet, daß** die Ein- und Ausgänge (19, 20; 23, 24) als Steckerklemmen an der Rückwand und/oder der Oberwand und/oder der Unterwand und/oder den Seitenwänden des Gehäuses (4) ausgebildet sind.

23. Steuerung nach Anspruch 9, **dadurch gekennzeichnet, daß** die Bedienoberfläche (7) eine geschützte Folientastatur und ein LCD-Display (8) aufweist, wobei alle Funktionen der Steuerung menügeführt über die Folientastatur abrufbar und mit ihren Daten auf dem LCD-Display (8) Online umschaltbar in verschiedenen Sprachen und/oder Einheitensystemen ablesbar sind.

24. Steuerung nach Anspruch 9, **dadurch gekennzeichnet, daß** die Bedienoberfläche (7) Leuchtdioden (9) für die Überwachung und Anzeige der Hauptfunktionen und für Störungs- und/oder Wartungsmeldungen aufweist.

25. Steuerung nach Anspruch 8, **dadurch gekennzeichnet, daß** neben den durch den Aggregat-Typ belegten Ein- und Ausgängen (19, 20; 23, 24) zusätzlich freie Ein- und Ausgänge vorgesehen sind.

26. Steuerung nach Anspruch 25, **dadurch gekennzeichnet, daß** die freien Ausgänge über die Bedienoberfläche oder die Datenschnittstellen mit beliebigen in der Steuerung vorhandenen Signalen belegt werden können.

27. Steuerung nach Anspruch 26, **dadurch gekennzeichnet, daß** für die Belegung der freien Ausgänge zusätzliche Datenprofile existieren, welche über die Bedienoberfläche oder die Datenschnittstellen aufgerufen und/oder verändert werden können.

28. Steuerung nach einem der vorhergehenden Ansprüche, **dadurch gekennzeichnet, daß** über die Menüsteuerung ein Prüfmodus aufrufbar ist, bei welchem lokal oder per Datenfernübertragung bei Betrieb des Aggregates die Werte der analogen und/oder digitalen Ein- und Ausgänge einzeln abfragbar sind und bei Stillstand des Aggregates außerdem die Zustände der Ausgänge unabhängig von der Steuerungslogik beliebig vorgebbar sind.

## Claims

1. An electronic control for apparatuses in producing compressed air or vacuum, with programmable electronic circuits for control, regulation and monitoring of the technical functions of said apparatuses, in particular the functions of the compressed air-producing means or the vacuum pump and the associated drives as well as compressed air treatment, **characterised in that** the electronic control is in the form of a standardised control for use in a plurality of different apparatuses in compressed air or vacuum production and includes an industrial PC or industrial microcomputer controlled and monitored by an operating system (34) with one or more microprocessors (12) and a central data store (13) which includes at least control and regulating software (36) and a plurality of apparatus-specific data profiles (40) in such a way that same can be called up, which include the data belonging to the apparatuses and their components in respect of the control and regulating algorithms and/or control and/or regulating parameters and/or the technical characteristic and limit values and/or the apparatus-specific occupation of the inputs and outputs (19, 20; 23, 24), wherein the electronic control is incorporated into the operating panel of an apparatus for compressed air or vacuum production.

2. A control according to claim 1 **characterised in that** the operating system (34) is a real-time operating system.

3. A control according to claim 1 or claim 2 **characterised in that** installed on the operating system (34) is a run time system (35) (software processor or virtual machine) which converts program instructions of the control and regulating software (36) into a representation which can be processed by the microprocessor(s) (12) of the control and which implements control over execution.

4. A control according to claim 3 **characterised in that** the run time system (35) is a soft-PLC or soft-SPC and emulates a stored-program control.

5. A control according to claim 1 or claim 2 **characterised in that** the operating system (34) without an additional run time system (35) supports the use of a programming language for the control and regulating software.

6. A control according to claim 3, claim 4 or claim 5 **characterised in that** programming of the control and regulating software is effected in a programming language for stored-program controls.

7. A control according to one of claims 1 to 6 **characterised in that** the software in the central data store (13) comprises at least components
- for the control and regulating logic (36),
- for actuation of an operating surface (operating and observing software) (37),
- for management of a history store (job processing) (38) and
- for communication by way of interfaces (communication applications) (39)
and that said components access a common database in which the data profiles (40) are also stored.

8. A control according to one of claims 1 to 7 **characterised by**
- a plurality of digital or analog inputs and outputs (19, 20; 23, 24) for status detection and control of the connected apparatus components, the occupation of which can be established by way of the control and regulating software (36),
- an operating surface (7) with plain text display, and
- one or more standardised data interfaces (14, 15, 16) for the communicative connection of higher-order, side-order or lower-order systems.

9. A control according to claim 8 **characterised in that** the industrial PC or industrial microcomputer and the associated data store (13) are arranged in a compact shielded casing (5) which can be fitted into the operating panel (6) of an apparatus for compressed air or vacuum production and the front side of which has the operating surface (7) with plain text display while the rear wall or the top wall and/or the bottom wall and/or the side wall of the casing (5) are provided with the digital and/or analog inputs and outputs and the data interfaces.

10. A control according to claim 1 **characterised in that** the data of each called-up data profile (40) including the data determining the occupation of the inputs and outputs (19, 20; 23, 24) can be varied by means of the operating surface (7) and/or by way of a data interface (14, 15, 16).

11. A control according to claim 1 **characterised in that** a plurality of different, password-protected hierarchically stepped levels are set up for the variation in the data profiles (40) or other settings.

12. A control according to claim 7 **characterised in that** for the purposes of fault analysis and analysis of the operating behaviour over a long period of time the history store retains given events or states from the past with date, clock time, status and explanation.

13. A control according to claim 12 **characterised in that** the content of the history store can be called up in plain text on the display (8) and/or by way of the communicative data interfaces (14, 15, 16).

14. A control according to claims 12 or 13 **characterised by** an evaluation algorithm for the history store, on the basis of which the behaviour of the control for the future can be optimised by means of the stored events and/or states from the past.

15. A control according to claim 8 **characterised in that** the software of the industrial PC or industrial microcomputer is freely programmable by way of one of the data interfaces (14, 15, 16) locally or by way of remote data transmission and can thus be adapted as desired.

16. A control according to claim 15 **characterised in that** the software of the industrial PC or industrial microcomputer has a stored-program timer function which can control the apparatus in accordance with a predetermined time program.

17. A control according to claim 8 **characterised in that** installed on the industrial PC or industrial microcomputer are apparatus-specific software fuzzy controllers (41) each comprising an apparatus-specific regulation base (42) of an inference machine (43) and a condition interface (44) associated with the inputs and an action interface (45) associated with the outputs.

18. A control according to claim 8 **characterised in that** a serial RS-232 interface (14) is provided as one of the standardised communicative interfaces.

19. A control according to claim 8 **characterised in that** a serial RS-485 interface (15) is provided as one of the standardised communicative interfaces.

20. A control according to claim 8 **characterised in that** a profi-bus interface (16) is provided as one of the standardised communicative interfaces.

21. A control according to claim 8 **characterised in that** the system bus (18) of the industrial PC or industrial microcomputer is provided with an interface for the connection of expansion boards, preferably with additional inputs and outputs (23, 24).

22. A control according to claim 9 **characterised in that** the inputs and outputs (19, 20; 23, 24) are in the form of plug terminals at the rear wall and/or the top wall and/or the bottom wall and/or the side walls of the casing (4).

23. A control according to claim 9 **characterised in that** the operating surface (7) has a protected film keyboard and an LCD display (8), wherein all functions of the control can be called up in menu-controlled fashion by way of the film keyboard and can be read with their data on the LCD display (8) in online switchable fashion in various languages and/or unit systems.

24. A control according to claim 9 **characterised in that** the operating surface (7) has light emitting diodes (9) for monitoring and display of the main functions and for fault and/or maintenance messages.

25. A control according to claim 8 **characterised in that** free inputs and outputs are additionally provided besides the inputs and outputs (19, 20; 23, 24) occupied by the type of apparatus.

26. A control according to claim 25 **characterised in that** the free outputs can be occupied by way of the operating surface or the data interfaces with any signals present in the control.

27. A control according to claim 26 **characterised in that** for occupation of the free outputs there exist additional data profiles which can be called up and/or altered by way of the operating surface or the data interfaces.

28. A control according to one of the preceding claims **characterised in that** a test mode can be called up by way of the menu control, in which mode the values of the analog and/or digital inputs and outputs can be individually interrogated locally or by remote data transmission in operation of the apparatus and in addition when the apparatus is stopped the states of the outputs can be predetermined as desired independently of the control logic.

## Revendications

1. Commande électronique pour des agrégats de compression d'air et d'obtention du vide avec des circuits de commutation électroniques programmables pour la commande, la régulation et le contrôle des fonctions techniques de tels agrégats, en particulier des fonctions du compresseur d'air ou de la pompe à vide et des entraînements associés ainsi que de la préparation d'air, **caractérisée en ce que** la commande électronique est formée comme commande standardisée pour l'utilisation dans une pluralité d'agrégats différents de compression d'air ou d'obtention du vide et présente un PC industriel ou un micro-ordinateur industriel contrôlé et commandé par un système d'exploitation (34) avec un ou plusieurs microprocesseur(s) (12) et une mémoire de données centrale (13), qui contient tout au moins des logiciels de commande et de régulation (36) et une pluralité de profils de données spécifiques aux agrégats (40) adressables, lesquels englobent les données appartenant aux agrégats et à leurs composants concernant les algorithmes de commande et de réglage et/ou les paramètres de commande et/ou de réglage et/ou les valeurs limites et les caractéristiques et/ou l'occupation des entrées et des sorties (19, 20 ; 23, 24), où la commande électronique peut être introduite dans la table de commande d'un agrégat pour la compression d'air ou l'obtention du vide.

2. Commande selon la revendication 1, **caractérisée en ce que** le système d'exploitation (34) est un système d'exploitation en temps réel.

3. Commande selon la revendication 1 ou 2, **caractérisée en ce qu'**un système de temps d'exploitation (35) (processeur du logiciel ou machine virtuelle) est installé sur le système d'exploitation (34), lequel transforme les instructions du programme du logiciel de commande et de régulation (36) en une représentation, qui peut être traitée par le(s) microprocesseur(s) (12), et lequel prend en charge le contrôle de l'élaboration.

4. Commande selon la revendication 3, **caractérisée en ce que** le système de temps d'exploitation (35) est un ordinateur logique programmable ou un système à programme enregistré et émule une commande à programme enregistrable.

5. Commande selon la revendication 1 ou 2, **caractérisée en ce que** le système d'exploitation (34) assiste sans système de temps d'exploitation supplémentaire (35) l'utilisation d'un langage de programmation pour le logiciel de commande et le logiciel de régulation.

6. Commande selon la revendication 3, 4 ou 5, **caractérisée en ce que** la programmation du logiciel de commande et de régulation se passe dans un langage de programmation pour les commandes à programme enregistrable.

7. Commande selon les revendications 1 à 6, **caractérisée en ce que** le logiciel dans la mémoire de données centrale (13) est constitué au moins de composants
- pour la logique de commande et de régulation (36)
- pour l'excitation d'une surface de commande (logiciel de commande et d'observation) (37)
- pour la gestion d'une mémoire historique (traitement de la commande) (38) et
- pour la communication sur les interfaces (applications de communication) (39)
et que ces composants ont accès à une base de données commune, dans laquelle sont également mémorisés les profils de données (40).

8. Commande selon l'une des revendications 1 à 7, **caractérisée en ce que**
- une pluralité d'entrées et de sorties numériques ou analogiques (19, 20 ; 23,24) pour la saisie des données d'état et la commande des composants d'agrégats en circuit, dont l'occupation est définissable sur le logiciel de commande et de régulation (36),
- une surface de commande (7) avec l'affichage du texte descriptif,
- et une ou plusieurs interface(s) de données standardisées (14, 15, 16) pour la connexion de systèmes directs, secondaires ou accessoires.

9. Commande selon la revendication 8, **caractérisée en ce que** le PC industriel ou le micro-ordinateur industriel et la mémoire de données associée (13) sont agencés dans un boîtier (5) protégé, compact, lequel peut être installé dans la table de commandes (6) d'un agrégat pour la compression d'air ou l'obtention du vide et dont la face présente la surface de commande (7) avec un affichage de texte descriptif, alors que la face arrière ou la face supérieure et/ou la face inférieure et/ou la face latérale du boîtier (5), sont dotées d'entrées et de sorties numériques et/ou analogiques.

10. Commande selon la revendication 1, **caractérisée en ce que** les données de chaque profil de données adressé (40) y compris les données déterminant l'occupation des entrées et des sorties (19, 20 ; 23, 24) peuvent être changées au moyen de la surface de commande (7) et/ou sur une interface (14, 15, 16).

11. Commande selon la revendication 1, **caractérisée en ce que** plusieurs niveaux différents, échelonnés de manière hiérarchique et protégés par un mot de passe, sont établis pour la variation des profils de données (40) ou d'autres réglages.

12. Commande selon la revendication 7, **caractérisée en ce que** la mémoire historique enregistre dans le but de l'analyse des défauts et l'analyse de la tenue en service sur une large plage horaire de certains événements ou états provenant du passé avec la date, l'heure, l'état et l'explication.

13. Commande selon la revendication 12, **caractérisée en ce que** le contenu de la mémoire historique peut être extrait en texte descriptif sur l'affichage (8) et/ou sur les interfaces de données communicatives (14, 15, 16).

14. Commande selon la revendication 12 ou 13, **caractérisée par** un algorithme d'analyse pour la mémoire historique, à partir de laquelle le comportement de la commande peut être optimisé pour l'avenir au moyen d'événements et/ou d'états mémorisés provenant du passé.

15. Commande selon la revendication 8, **caractérisée en ce que** le logiciel du PC industriel ou du micro-ordinateur industriel est localement sur l'une des interfaces de données (14, 15, 16) ou librement programmable par transmission de données et par ce moyen aléatoirement adaptable.

16. Commande selon la revendication 15, **caractérisée en ce que** le logiciel du PC industriel ou du micro-ordinateur industriel contient une fonction de temporisation à programme enregistrable, qui peut commander l'agrégat selon un programme temporel prédéterminé.

17. Commande selon la revendication 8, **caractérisée en ce que** des Software-Fuzzy-Controller (41) spécifiques aux agrégats peuvent être installés sur le PC industriel ou le micro-ordinateur industriel, chacun consistant en une base de réglage (42) spécifique aux agrégats d'un moteur d'inférence (43) et en une interface de condition (44) affectée aux entrées ainsi qu'en une interface d'action (45) affectée aux sorties.

18. Commande selon la revendication 8, **caractérisée en ce qu'**un port de communication sériel RD-232 est prévu en tant que l'une des interfaces communicatives standardisées.

19. Commande selon la revendication 8, **caractérisée en ce qu'**un port de communication sériel RS-485 (15) est prévu en tant que l'une des interfaces communicatives standardisées.

20. Commande selon la revendication 8, **caractérisée en ce qu'**une interface Profibus (16) est prévue en tant que l'une des interfaces communicatives standardisées.

21. Commande selon la revendication 8, **caractérisée en ce que** le bus système (18) du PC industriel ou du micro-ordinateur industriel est doté d'une interface pour la connexion de disques d'extension, de préférence avec des entrées et des sorties supplémentaires (23, 24).

22. Commande selon la revendication 9, **caractérisée en ce que** les entrées et les sorties (19, 20 ; 23, 24) sont formées en tant que bornes de connexion sur la face arrière et/ou la face supérieure et/ou la face inférieure et/ou les faces latérales du boîtier (4).

23. Commande selon la revendication 9, **caractérisée en ce que** la surface de commande (7) présente un clavier à membrane protégé et un afficheur à cristaux liquides (8), où toutes les fonctions de commande commandées par menu peuvent être appelées sélectivement sur le clavier à membrane et commutées en-ligne avec leurs données sur l'afficheur à cristaux liquides (8) et lues dans différentes langues et/ou systèmes unitaires.

24. Commande selon la revendication 9, **caractérisée en ce que** la surface de commande (7) présente des diodes lumineuses (9) pour le contrôle et l'affichage des fonctions principales et pour les messages de défaillance et d'entretien.

25. Commande selon la revendication 8, **caractérisée en ce qu'**en plus des entrées et des sorties (19, 20 ; 23, 24) occupées par le type d'agrégat sont prévues des entrées et des sorties libres supplémentaires.

26. Commande selon la revendication 25, **caractérisée en ce que** les sorties libres sur la surface de commande ou les interfaces de données peuvent être occupées par des signaux aléatoires présents dans la commande.

27. Commande selon la revendication 26 , **caractérisée en ce que** des profils de données existent pour l'occupation des sorties libres, ces derniers peuvent être adressés et/ou changés sur la surface de commande ou les interfaces de données.

28. Commande selon l'une des revendications précédentes, **caractérisée en ce qu'**un mode de vérification est adressable sur la commande du menu, avec lequel localement ou par transmission de données lors de l'exploitation de l'agrégat les valeurs des entrées et/ou des sorties numériques et/ou analogiques sont interrogeables et lors de l'incident de l'agrégat les états des sorties peuvent être, en outre, prédéterminés indépendamment de la logique de commande.
